# EUROPÄISCHE PATENTSCHRIFT

(11) **EP 0 632 101 B1**
(45) Veröffentlichungstag und Bekanntmachung des Hinweises auf die Patenterteilung: **20.01.1999**
(21) Anmeldenummer: 94250152.9
(22) Anmeldetag: 14.06.1994
(51) Int. Cl.: C08L 99/00, C04B 18/24, E04B 1/80

(54) **Verfahren zur Herstellung von Extrudaten aus nachwachsenden Rohstoffen**
Process for the preparation of extrudates from regenerable raw materials
Procédé pour la préparation d'extrudats à partir de matières premières repoussantes

(30) Priorität: 24.06.1993 DE 4321627
(43) Veröffentlichungstag der Anmeldung: 04.01.1995
(73) Patentinhaber: Institut für Getreideverarbeitung GmbH, 14558 Bergholz-Rehbrücke (DE)
(72) Erfinder: Volk, Jürgen, Dr., D-10369 Berlin (DE); Kropp, Detlef, D-14480 Potsdam (DE)
(74) Vertreter: Erich, Dieter

(56) Entgegenhaltungen:
- EP-A- 0 436 842
- EP-A- 0 474 095
- DE-A- 4 126 756
- FR-A- 2 243 306
- DATABASE WPI Week 9129, Derwent Publications Ltd., London, GB; AN 213018 & JP-A-3 136 809 (KUBOTA CORP) 11. Juni 1991
- DATABASE WPI Week 7907, Derwent Publications Ltd., London, GB; AN 12542B & JP-A-54 000 031 (INOUE) 5. Januar 1979
- DATABASE WPI Week 7739, Derwent Publications Ltd., London, GB; AN 70137Y & SU-A-536 152 (AGRIC BUILD CONS EX) 12. Januar 1977

## Beschreibung

Die Erfindung betrifft ein Verfahren zur Herstellung von granulierbaren Extrudaten aus nachwachsenden Rohstoffen unter Verwendung biopolymerer und mineralischer Rohstoffe.

Es ist bekannt, Biopolymere für Bau- und Füllstoffe zu verwenden. Die Verwendung dieser Bau- und Füllstoffe ist wegen ihrer negativen Eigenschaften, insbesondere ihrer ungenügenden mechanischen und chemischen Belastbarkeit und wegen des hohen Verarbeitungsaufwandes im Einzelfall sehr stark eingeschränkt.
Die Verwendung von land- und forstwirtschaftlich erzeugten Biopolymeren und die Nutzung nachwachsender natürlicher Ressourcen ist ein wirtschaftliches Erfordernis und Grundlage umfangreicher Untersuchungen in Forschung und Industrie.
Aus der EP 0 474 095 ist es beispielsweise bekannt, zerkleinerte, stärkehaltige Naturprodukte in einem Extruder einer Wärmebehandlung zu unterziehen und im Ergebnis dieses Verfahrens biologisch abbaubare Gebrauchsgegenstände zu erhalten. Die Schrift offenbart es auch, die dabei erhaltenen Produkte zu granulieren und als Füllstoffe in Verpackungen einzusetzen. Ein Einsatz der nach der Lehre der Druckschrift erhaltenen Materialien in der Bauindustrie kommt wegen ihrer geringen Festigkeit und der Brennbarkeit nicht in Betracht.
Die EP 0 436 842 offenbart einen Bausatz von Leichtbauteilen für Wände, Stützen und dgl., bei deren Herstellung organische Stoffe, wie unbehandeltes, gehäckseltes Stroh, als Zuschlagstoffe insbesondere einer Gewichtsreduzierung dienen. Ein ähnliches Verfahren offenbart die JP-A-54 000 031 (WPI/Derwent 79-12542B [07]). Das dargestellte Verfahren dient der Herstellung einer feuerfesten Dämmplatte unter Verwendung faseriger Biopolymere, wie Stroh, Baumrinde oder Reishüllen und mineralischer Füllstoffe. Dabei gewährleistet der Einsatz faseriger, nicht oder wenig Stärke enthaltener Biopolymere auch die erforderliche statische Festigkeit der erzeugten Platte. Bei dem in dieser Druckschrift aufgezeigten Verfahren ist der Anteil der Biopolymere relativ hoch. Um die für den Einsatz am Bau geforderte Wasserfestigkeit zu gewährleisten, werden dabei Biopolymere verwendet, die möglichst hydrophob, zumindest aber nicht übermäßig hydrophil wirken. Jedoch wird aufgezeigt, daß optional der Zusatz wasserabweisender Zuschlagsstoffe erfolgen kann. Aufgrund der eingesetzten faserigen Rohstoffe ist das nach dem Verfahren durch gewonnene Extrusion gewonnene Endprodukt für eine Granulierung ungeeignet. Die DE PS 32 06 751 , IPC C 08 L 3/02, offenbart ein Verfahren zur Herstellung aufgeschäumter, gelatinierter Stärkeprodukte, mit dem körnige oder pulverisierte Stärke oder stärkehaltige Materialien in Gegenwart von 10 - 30 Gew.% Wasser und einem Gas bildenden oder entwickelnden Treibmittel in einer Extruderpresse auf Temperaturen von 60 - 220°C erhitzt und extrudiert werden.
Der bekannten Lösung liegt dabei die Aufgabe zugrunde, ein Schaumstoffmaterial aus leicht erhältlichen Rohstoffen unter Anwendung einer einfachen Verfahrensweise herzustellen und wie die bekannten Kunststoffschäume vielseitig einzusetzen. Das auf diese Weise gewonnene Schaumstoffmaterial soll darüber hinaus auch für Lebensmittelzwecke geeignet sein.
Die Lösung hat den Nachteil, daß ein Zusatz von mineralischen Komponenten als Treibmittel oder auch als Treibmittelgrundlage erfolgt.
Die dabei verwendeten Rohstoffe erfordern eine vorhergehende, separate Modifizierung und/oder Vernetzung, wobei die zum Einsatz gelangenden Mineralstoffe, Calzium- und Natriumcarbonat sind.

Der Erfindung liegt die Aufgabe zugrunde, ein Verfahren zur Herstellung von granulierbaren Extrudaten aus Rohstoffen, vorzugsweise nachwachsenden Rohstoffen, zu schaffen, mit dem es möglich ist, die Eigenschaften der biopolymeren Träger zu verändern, insbesondere ihre Löslichkeit durch den Zusatz von Komponenten zu verhindern und ein festes, wasser- und temperaturbeständiges Extrudat mit für den Einsatz in der weiterverarbeitenden Industrie geeigneten Voraussetzungen zu schaffen.

Erfindungsgemäß wird die Aufgabe dadurch gelöst, daß ein Verfahren zur Anwendung gebracht wird, bei dem stärkereiche biopolymere Rohstoffen, insbesondere Getreide und mineralischen Zusätzen mit einem gesondert zugesetzten Hydrophobierungsmittel vermischt und in einem Extruder verarbeitet werden.
Bei dem verwendeten Getreide handelt es sich vorteilhafterweise um Weizen, Roggen, Mais, Triticale, Reis, Gerste oder Buchweizen.
Als mineralische Zusätze werden entsprechend einer Ausbildung der Erfindung Kalksteinmehl, Kalkhydrat, Portlandzemente, Mergel, Tonmehle, Perlit, Kieselgur, Glas oder Gips verwendet.
Es ist im Sinne der Erfindung, wenn die stärkereichen biopolymeren Rohstoffe und die mineralischen Zusätze mit weiteren, stärkearmen biopolymeren Rohstoffensowie sowie mit dem gesondert zugesetzten Hydrophobierungsmittel vermischt und in dem Extruder verarbeitet werden.
Dabei werden die stärkearmen biopolymeren Rohstoffe gemäß einer vorteilhaften Ausführung der Erfindung als Ölsaatenextraktionsschrote zugesetzt.
Im Sinne des Verfahrens handelt es sich bei diesen Ölsaatenextraktionsschroten um Raps-, Baumwollsaat-, Soja-, Sonnenblumen- oder Leinsaatextraktionsschrote.
Auch der Einsatz von Pflanzenfasern ist bei der Durchführung des erfindungsgemäßen Verfahrens als günstig anzusehen, wobei es sich bei den Pflanzenfasern vorteilhafterweise um Baumwolle, Flachs und Lein, Holzmehl, China-Schilf, Stroh oder getrocknetes Gras handelt.
Eine weitere Vorteilhafte Ausgestaltung des Verfahrens ergibt sich durch den Zusatz von tierischer Wolle, vorzugsweise von Schafwolle
Die Erfindung ist vorteilhaft gestaltet, wenn die Zugabe der Hydrophobierungsmittel vor und/oder während der Extrusion, in Form von Natron- oder Kaliwasserglas und Natriumaluminat oder organische Säuren, insbesondere Essigsäuren und deren Verbindungen, oder als Silicagel, erfolgt.
Ausgestaltet ist die Erfindung dadurch, daß das Extrudat mit folgender Zusammensetzung ausgebildet

| | | | |
|---|---|---|---|
| Biopolymere | 20 ... 99 Gew. %, | vorzugsweise | 40 ... 90 Gew. % |
| Mineralische Zusätze | 0,5... 65 Gew. %, | vorzugsweise | 1 ... 30 Gew. % |
| Hydrophobierungsmittel | 1 ... 20 Gew. %, | vorzugsweise | 2 ... 15 Gew.% |

und die Extrusionsdurchführung mit nachfolgenden Voraussetzungen erfüllt wird.

| | | | |
|---|---|---|---|
| Extrusionstemperatur | 50 ... 250°C, | vorzugsweise | 90 ... 200°C |
| Massedruck | 3 ... 45 MPa, | vorzugsweise | 10 ... 30 MPa |
| Schneckendrehzahl | 100 ... 500 min.⁻¹, | vorzugsweise | 150 ... 350 min.⁻¹ |
| Feuchteanteil | 0 ... 99 %, | vorzugsweise | 10 ... 30 % |

Im weiteren Sinne der Erfindung ist es, wenn durch die Anwendung des Verfahrens die Extrudate in der Form des Produktes als Granulat, oder in flächiger Form ausgebildet, folgende Produktparameter aufweisen:

| | |
|---|---|
| Brandverhalten | brennt bedingt selbständig weiter |
| Wasserdampfdiffusionswiderstand | 2 ... 50 µ |
| Wärmeleitfähigkeit | 0,035 ... 0,060 W/mK |
| Druckfestigkeit | 0,8 ... 20 N/mm² |
| pH-Wert | 6 ... 11 |

Die mit dem Verfahren erhältlichen Extrudate weisen in Granulatform vorteilhafterweise eine Schüttdichte von 0,060 bis 0,800 kg/dm³, vorzugsweise
0,080 bis 0,300 kg/dm³ auf.
Mit der Erfindung soll der Vorzug erreicht werden, durch den Zusatz von mineralischen Komponenten zu den stärkereichen biopolymeren Trägern, den durch den Extrusionsprozeß auftretenden Effekt einer erhöhten Löslichkeit aufzuheben, sowie Produkte mit mechanisch und chemisch stabilen Eigenschaften zu erzeugen. Als weiterer Vorteil der Verfahrensführung ist durch die kombinierte Einwirkung von Druck- und Scherkräften sowie der Temperatur die sofortige Abbindung der mineralischen Zusätze zu erreichen, wobei in Verbindung mit dem Zusatz der angeführten Hydrophobierungsmittel sich während und/oder nach der Extrusion hydrophob wirkende Verbindungen, beispielsweise durch Verkieseln und/oder Silicalisieren bilden und deren Positionierung im Verfahrensablauf vor allem in den Randschichten erhalten wird.
Das vorliegende Verfahren weist den Vorteil auf, daß die mineralischen Zusätze inklusive dem Hydrophobierungsmittel mit dem biopolymeren Trägerstoff so zu extrudieren sind, daß das gewonnene Extrudat als schüttfähiges Granulat und/oder flächiges Produkt mit homogener inhaltsstofflicher Verteilung entsprechend den vorgesehenen Verwendungszwecken vorliegt.
Vorteilhaft sieht das erfindungsgemäße Verfahren den Zusatz von Mineralstoffen als Festigkeitskomponente vor. Die Stärke wirkt dabei als Expansionsmittel und verändert sich in ihren physikalischen Parametern, u.a. durch Zunahme der Wasserlöslichkeit. Dieser Umstand wird durch die Verwendung der vorgeschlagenen Mineralien gebremst bzw. umgekehrt.
Es ist ein weiterer Verfahrensvorteil, daß im Regime des Materialeinsatzes entsprechend der Erfindung von der Verwendung von Getreide ausgegangen wird, das bis auf eine mechanische Bearbeitung (Zerkleinern) keine chemischen und/oder thermischen Modifizierungen vor der Extrusion erfährt und daß darüber hinaus auch nicht stärkereiche Biopolymere, wie beispielsweise Öl- oder Leinsaatenextraktionsschrote, Baumwolle, Flax oder tierische Wolle, als Ausgangsstoffe in das Verfahren einbezogen werden können. Das Gesamtverfahren zeichnet sich vor allem durch einen geringeren Verbrauch an spezifischer Energie aus. Das Verfahren erfordert keine Verwendung von Trinkwasser. Es ist abwasserfrei, verlangt also keine Reinigung eines evtl. abzuführenden Wassers.
Ein dem erfindungsgemäßen Verfahren anhaftender Vorzug besteht darin, daß karbonathaltiges Material (Naturstoffe, wie Kalkstein- und Tonmehl mit Fremdbestandteilen) Verwendung findet. Diese Mineralkomponente stellt das Bindeglied zu dem Hydrophobierungsmittel dar. Der Zusatz von Säure steht im Zusammenhang mit der Bildung von Silicagelen und erfolgt nur bei Anwesenheit von Wasserglas. Ein entscheidender Vorteil des Zusatzes von Wasserglas ist die strukturbildende Wirkung.
Die unter Einsatz des erfindungsgemäßen Verfahrens gewonnenen Produkte lassen sich vorteilhaft in der Baustoffapplikation als Wärmedämm- und Schallschutzmittel sowie zur Mikroklimatisierung von insbesonderen Wohn- und Arbeitsräumen verwenden.
Eine weitere vorteilhafte Anwendung der Produkte ist durch ihren Einsatz als als Füllstoffe in Möbel- und Einrichtungselementen gegeben. Selbstverständlich ist es aber auch möglich, auf die Granulierung des Extrudates zu verzichten und das Extrudat zur Herstellung von Formkörpern für den Einsatz in Möbel- und Einrichtungselementen zu verwenden.
Als eine weitere besonders vorteilhafte Eigenschaft der mit dem erfindungsgemäßen Verfahren hergestellten Produkte, ist auf deren vollständige biologische Abbaubarkeit hinzuweisen.

Die Erfindung soll an Hand von Ausführungsbeispielen näher erläutert werden:

### Beispiel 1

100 kg handelsübliches Mahlprodukt aus Roggen mit einem Feuchteanteil von 14 % werden mit 10 kg Kalkhydrat und 10 kg Kali-Wasserglas versetzt.
Diese Mischung wird in einen Extruder gegeben, wobei der Kali-Wasserglasanteil auch während der Extrusion zugegeben werden kann.
Der aus der Düse des Extruders austretende Strang wird mittels rotierender Messerklingen auf eine Korngröße von 6 - 10 mm granuliert.
Der Extruder wird mit einem Temperaturbereich von 80 bis 150°C und einem Massedruck von 8 bis 10 MPa gefahren. Die Schneckendrehzahl beträgt 350 min⁻¹.
Das Zusetzen von Essigsäure während der Extrusion verbessert die Hydrophobierungswirkung des Kali-Wasserglas durch Ausfällen von unlöslichen Silikatverbindungen. Das Extrudat weist eine Schüttdichte von 0,100 kg/dm³ auf. Die Brandgefahr ist sehr eingegrenzt, da das Granulat nur bedingt selbständig weiterbrennt. Der Wasserdampfdiffusionswiderstand beträgt 3 - 4 µ. Die Wärmeleitfähigkeit erreicht 0,040 W/mK bei einer Druckfestigkeit von 1,5 N/mm². Der pH-Wert wird mit 7 - 8 klassifiziert.
Das entsprechend dem Verfahren hergestellte Produkt ist als Baustoffapplikation, speziell als Wärmedämmstoff anwendbar.

### Beispiel 2

50 kg Ölsaatenextraktionsschrote, z.B. Rapsextraktionsschrot, werden mit 30 kg Getreide, z.B. Gerstenfeinschrot, 10 kg Holzmehl, 5 kg Tonmehl und 5 kg Perlit versetzt. Die Zugabe von 12 kg Silica-Gel stellt den Feuchteanteil auf 25 % ein. Die Extrusion erfolgt unter den Bedingungen:
Schneckendrehzahl 150 min⁻¹, Massedruck 30 MPa, Extrusionstemperaturprofil 90 bis 180°C.
Das Material verläßt als flächiges Produkt in der Größe 350 x 15 mm die Extruderdüse am Kopfende. Es weist eine Schüttdichte von 0,300 kg/dm³ auf. Der Wasserdiffusionswiderstand beträgt 5 bis 6 µ, die Druckfestigkeit 10 N/mm², die Wärmeleitfähigkeit 0,060 W/mK.
Das Produkt ist als Schallschutz- bzw. Mikroklimatisierungselement anwendbar. Nach einer groben Zerkleinerung ist es vollständig biologisch abbaubar.

### Beispiel 3

10 kg Pflanzenfasern, z.B. Flachs, und 45 kg Getreide, z.B. Triticale, werden mit 40 kg Kalkstein mehl versetzt. Während der Extrusion wird der Feuchteanteil auf 20 % unter Zusatz von 8 kg Natriumaluminat-Natron-Wasserglaslösung eingestellt. Die Extrusionsbedingungen erreichen folgende Werte: Extrusionstemperaturprofil 85 bis 130°C, Schneckendrehzahl 225 min⁻¹, Massedruck 10 MPa.
Das Granulat mit den Abmessungen von 10 bis 20 mm weist eine Schüttdichte von 0,250 kg/dm³ auf und wird als Füllstoff von Einrichtungselementen verwendet.

## Patentansprüche

1. Verfahren zur Herstellung von granulierbaren Extrudaten aus nachwachsenden Rohstoffen, unter Verwendung von biopolymeren und mineralischen Rohstoffen, **dadurch gekennzeichnet, daß** biopolymere Rohstoffe, ausgebildet als Getreide und mineralische Zusätze mit einem gesondert zugesetzten Hydrophobierungsmittel vermischt und in einem Extruder verarbeitet werden, wobei das Hydrophobierungsmittel vor und/oder während der Extrusion, in Form von Natron- oder Kaliwasserglas und Natriumaluminat oder organischen Säuren, insbesondere Essigsäuren und deren Verbindungen, oder als Silicagel zugesetzt wird.

2. Verfahren nach Anspruch 1, **dadurch gekennzeichnet, daß** es sich bei dem Getreide um Weizen, Roggen, Mais, Triticale, Reis, Gerste oder Buchweizen handelt.

3. Verfahren nach Anspruch 1 oder 2, **dadurch gekennzeichnet, daß** als mineralische Zusätze Kalksteinmehl, Kalkhydrat, Portlandzemente, Mergel, Tonmehle, Perlit, Kieselgur, Glas oder Gips verwendet werden.

4. Verfahren nach Anspruch 2 oder 3, **dadurch gekennzeichnet, daß** das Getreide und die mineralischen Zusätze mit weiteren, stärkearmen biopolymeren Rohstoffen, sowie mit dem gesondert zugesetzten Hydrophobierungsmittel vermischt und in dem Extruder verarbeitet werden.

5. Verfahren nach Anspruch 4, **dadurch gekennzeichnet, daß** als stärkearme biopolymere Rohstoffe Ölsaatenextraktionsschrote zugesetzt werden.

6. Verfahren nach Anspruch 5, **dadurch gekennzeichnet, daß** es sich bei den Ölsaatenextraktionsschroten um Raps-, Baumwollsaat-, Soja-, Sonnenblumen- oder Leinsaatextraktionsschrote handelt.

7. Verfahren nach Anspruch 4 oder 5, **dadurch gekennzeichnet, daß** als stärkearme biopolymere Rohstoffe Pflanzenfasern zugesetzt werden.

8. Verfahren nach Anspruch 7, **dadurch gekennzeichnet, daß** es sich bei den Pflanzenfasern um Baumwolle, Flachs , Lein, Holzmehl, China-Schilf, Stroh oder getrocknetes Gras handelt.

9. Verfahren nach einem der Ansprüche 4, 5 oder 7, **dadurch gekennzeichnet, daß** als stärkearmer biopolymerer Rohstoff tierische Wolle zugesetzt wird.

10. Verfahren nach Anspruch 9, **dadurch gekennzeichnet, daß** die es sich bei der tierischen Wolle um Schafwolle handelt.

11. Verfahren nach einem der vorhergehenden Ansprüche, **dadurch gekennzeichnet, daß** die Zusammensetzung wie folgt ausgebildet ist:
| | |
|---|---|
| Biopolymere | 20 ... 99 Gew. % |
| Mineralische Zusätze | 0,5 ... 65 Gew. % |
| Hydrophobierungsmittel | 1 ... 20 Gew. % |

12. Verfahren nach Anspruch 11, **dadurch gekennzeichnet, daß** die Zusammensetzung wie folgt aus
| | |
|---|---|
| Biopolymere | 35 ... 90 Gew.% |
| Mineralische Zusätze | 1 ... 50 Gew.% |
| Hydrophobierungsmittel | 2 ... 15 Gew.% |
besteht.

13. Verfahren nach einem der vorhergehenden Ansprüche, **dadurch gekennzeichnet, daß** die folgenden Extrusionsbedingungen gewährleistet werden.
| | |
|---|---|
| Extrusionstemperatur | 50 ... 250°C |
| Massedruck | 3 ... 45 MPa |
| Schneckendrehzahl | 100 ... 500 min.⁻¹, |
| Feuchteanteil | 0 ... 99 % |

14. Verfahren nach Anspruch 13, **dadurch gekennzeichnet, daß** die folgenden Extrusionsbedingungen eingestellt werden.
| | |
|---|---|
| Extrusionstemperatur | 70 ... 200°C |
| Massedruck | 10 ... 30 MPa |
| Schneckendrehzahl | 150 ... 350 min⁻¹ |
| Feuchteanteil | 10 ... 30 % |

15. Verfahren nach einem der vorhergehenden Ansprüche, **dadurch gekennzeichnet, daß** die mit dem Verfahren erhältlichen Extrudate in Granulat- und flächiger Form folgende Produktparameter aufweisen:
| | |
|---|---|
| Brandverhalten | brennt nur bedingt selbständig weiter |
| Wasserdampfdiffusionswiderstand µ | 2 ... 50 |
| Wärmeleitfähigkeit | 0,035 ... 0,060 W/mK |
| Druckfestigkeit | 0,6 ... 20 N/mm² |
| pH-Wert | 6 ... 11 |

16. Verfahren nach Anspruch 15, **dadurch gekennzeichnet, daß** die mit dem Verfahren erhältlichen Extrudate in Granulatform eine Schüttdichte von 0,060 bis 0,800 kg/dm³ aufweisen.

17. Verfahren nach Anspruch 16, **dadurch gekennzeichnet, daß** die mit dem Verfahren erhältlichen Extrudate in Granulatform eine Schüttdichte von 0,080 bis 0,300 kg/dm³ aufweisen.

## Claims

1. Process for the preparation of granulatable extrudates from regrowing raw materials using biopolymeric and mineral raw materials **wherein** biopolymeric raw materials in the form of cereals and mineral additives are mixed with a separately added water-repellent agent and processed in an extruder, the water-repellent agent being added before and/or during extrusion in form of soda or potash waterglass and sodium aluminate or organic acids, especially acetic acids and their compounds, or of silica gel.

2. Process according to claim 1 **wherein** wheat, rye, maize, Triticale, rice, barley, or buckwheat can be used as cereals.

3. Process according to claim 1 or 2 **wherein** crushed limestone, calcium hydroxide, portland cement, marl, clay meals, perlite, diatomaceous earth, glass, or gypsum are used as mineral additives.

4. Process according to claim 2 or 3 **whereas** the cereals and mineral additives are mixed with further low-starchy biopolymeric raw materials and the separately added water-repellent agent, and processed in the extruder.

5. Process according to claim 4 **whereas** oilseed extraction expellers are added as low-starchy biopolymeric raw materials.

6. Process according to claim 5 **whereas** rape, cotton seed, soybean, or linseed expellers are the oilseed extraction expellers.

7. Process according to claim 4 or 5 **whereas** plant fibres are added as low-starchy biopolymeric raw materials.

8. Process according to claim 7 **whereas** cotton, flax, linseed plants, wood flour, China reed, straw, and dried grass are used as plant fibres.

9. Process according to one of the claims 4, 5 or 7 **wherein** animal wool is added as low-starchy biopolymeric raw material.

10. Process according to claim 9 **wherein** the animal wool is sheep wool.

11. Process according to one of the foregoing claims **wherein** the composition is as follows:
| | |
|---|---|
| Biopolymeres | 20 to 99 wt. % |
| Mineral additives | 0.5 to 65 wt. % |
| Water-repellent agents | 1 to 20 wt. % |

12. Process according to claim 11 **wherein** the composition consists of:
| | |
|---|---|
| Biopolymeres | 35 to 90 wt. % |
| Mineral additives | 1 to 50 wt. % |
| Water-repellent agents | 2 to 15 wt. % |

13. Process according to one of the foregoing claims **wherein** the following extrusion conditions are maintained:
| | |
|---|---|
| Extrusion temperature | 50 to 250 °C |
| Mass pressure | 3 to 45 MPa |
| Screw speed | 100 to 500 min.⁻¹ |
| Moisture | 0 to 99 % |

14. Process according to claim 13 **wherein** the following extrusion conditions are adjusted:
| | |
|---|---|
| Extrusion temperature | 70 to 200 °C |
| Mass pressure | 10 to 30 MPa |
| Screw speed | 150 to 350 min.⁻¹ |
| Moisture | 10 to 30 % |

15. Process according to one of the foregoing claims **wherein** the extrudates in granular or flat form obtained by the process, have the following product parameters:
| | |
|---|---|
| Burning performance | only conditional self-burning |
| Steam diffusion resistance | 2 to 50 µ |
| Thermal conductivity | 0.035 to 0.060 W/mK |
| Compressive strength | 0.6 to 20 N/mm² |
| pH-value | 6 to 11 |

16. Process according to claim 15 **wherein** the granular extrudates obtained by the process have a bulk density of 0.060 to 0.800 kg/dm³.

17. Process according to claim 16 **wherein** the granular extrudates obtained by the process have a bulk density of 0.080 to 0.300 kg/dm³.

## Revendications

1. Méthode de fabrication de produits extrudés granulables à base de matières naturelles reproductibles, utilisant des biopolymères et des matières premières minérales, **caractérisée en ce que** des biopolymères constituées par des céréales et des additifs minéraux sont mélangés à un agent imperméabilisant ajouté séparément et traités par extrudeur, l'agent imperméabilisant étant ajouté avant et/ou pendant l'extrusion sous forme de silicate de soude ou de potassium et d'aluminate de sodium ou d'acides organiques, notamment acides acétiques et leurs composés, ou en tant que gel de silice.

2. Méthode selon revendication 1, **caractérisée en ce que** les céréales sont constituées de froment, de seigle, de maïs, de blé, de riz, d'orge ou de sarrasin.

3. Méthode selon revendication 1 ou 2, **caractérisée en ce que** le calcaire broyé, l'hydrate de calcaire, le ciment portland, la marne, l'argile broyée, la perlite, la diatomite, le verre ou le plâtre peuvent être utilisés comme additifs minéraux.

4. Méthode selon revendication 2 ou 3, **caractérisée en ce que** les céréales et les additifs minéraux sont mélangés à d'autres biopolymères pauvres en amidon, ainsi qu'à l'agent imperméabilisant ajouté séparément, puis traités par extrudeur.

5. Méthode selon revendication 4, **caractérisée en ce que** des résidus de pressage de graines oléagineuses sont ajoutés comme biopolymères pauvres en amidon.

6. Méthode selon revendication 5, **caractérisée en ce que** les résidus de pressage de graines oléagineuses comprennent des tourteaux de colza, de graine de coton, de soja, de graine de tournesol ou de graine de lin.

7. Méthode selon revendication 4 ou 5, **caractérisée en ce que** des fibres végétales sont ajoutées comme biopolymères pauvres en amidon.

8. Méthode selon revendication 7, **caractérisée en ce que** les fibres végétales sont constituées de coton, de lin cru, de lin, de fibre de bois, de roseau de Chine, de paille ou de foin.

9. Méthode selon l'une des revendications 4,5 ou 7, **caractérisée en ce que** de la laine animale est ajoutée comme biopolymère pauvre en amidon.

10. Méthode selon revendication 9, **caractérisée en ce que** la laine animale est de la laine de mouton.

11. Méthode selon l'une des revendications précédentes, **caractérisée en ce que** la composition est formée comme suit:
| | |
|---|---|
| Biopolymères | 20 ... 99 % du poids |
| Additifs minéraux | 0,5 ... 65 % du poids |
| Agent imperméabilisant | 1 ... 20 % du poids |

12. Méthode selon revendication 11, **caractérisée en ce que** la composition est constituée comme suit:
| | |
|---|---|
| Biopolymères | 35 ... 90 % du poids |
| Additifs minéraux | 1 ... 50 % du poids |
| Agent imperméabilisant | 2 ... 15 % du poids |

13. Méthode selon l'une des revendications précédentes, **caractérisée en ce que** les conditions d'extrusion suivantes sont assurées.
| | |
|---|---|
| Température d'extrusion | 50 ... 250° C |
| Pression sur masse | 3 ... 45 MPa |
| Vitesse de rotation de la vis | 100 ... 500 min⁻¹ |
| Humidité relative | 0 ... 99 % |

14. Méthode selon revendication 13, **caractérisée en ce que** les conditions d'extrusion suivantes sont installées.
| | |
|---|---|
| Température d'extrusion | 70 ... 200° C |
| Pression sur masse | 10 ... 30 MPa |
| Vitesse de rotation de la vis | 150 ... 350 min⁻¹ |
| Humidité relative | 10 ... 30 % |

15. Méthode selon l'une des revendications précédentes, **caractérisée en ce que** les produits pouvant être obtenus par la méthode, extrudés en nappe ou sous forme de granulés, présentent les paramètres de produit suivants:
| | |
|---|---|
| Combustibilité | Combustion autonome prolongée difficile |
| Résistance à la diffusion | |
| de vapeur d'eau µ | 2 ... 50 |
| Conductibilité thermique | 0,035 ... 0,060 W/mK |
| Résistance à la compression | 0,6 ... 20 N/mm² |
| Valeur pH | 6 ... 11 |

16. Méthode selon revendication 15, **caractérisée en ce que** les produits extrudés pouvant être obtenus par la méthode présentent sous la forme de granulés une densité en vrac de 0,060 à 0,800 kg/dm³.

17. Méthode selon revendication 16, **caractérisée en ce que** les produits extrudés pouvant être obtenus par la méthode présentent sous la forme de granulés une densité en vrac de 0,080 à 0,300 kg/dm³.
